# EUROPÄISCHE PATENTSCHRIFT

(11) **EP 2 010 790 B1**
(45) Veröffentlichungstag und Bekanntmachung des Hinweises auf die Patenterteilung: **27.01.2010**
(21) Anmeldenummer: 07702724.1
(22) Anmeldetag: 12.01.2007
(51) Int. Cl.: F16B 13/06, F16B 13/08

(54) **BEFESTIGUNGSANKER**
FASTENING ANCHOR
ANCRAGE DE FIXATION

(30) Priorität: 21.04.2006 DE 102006018507
(43) Veröffentlichungstag der Anmeldung: 07.01.2009
(73) Patentinhaber: fischerwerke GmbH & Co. KG, 72178 Waldachtal (DE)
(72) Erfinder: LINKA, Martin, 72160 Horb a.N. (DE); SCHILLINGER, Peter, 72224 Ebhausen (DE)
(86) Internationale Anmeldenummer: PCT/EP2007/000251
(87) Internationale Veröffentlichungsnummer: WO 2007/121797

(56) Entgegenhaltungen:
- US-A- 2 075 714
- US-A- 3 958 488

## Beschreibung

Die Erfindung betrifft einen Befestigungsanker zur Befestigung eines Gegenstandes an einem Untergrund mit den Merkmalen des Oberbegriffs des Anspruchs 1.

Bereits seit geraumer Zeit sind Befestigungsanker mit gummiartigen Spreizelementen bekannt. Die Druckschrift US 2 075 714 A zeigt beispielhaft einen derartigen Befestigungsanker. Er weist einen Ankerbolzen aus Stahl mit einem in Einbringrichtung des Befestigungsankers vorne angeordneten mutterartigen Widerlager auf. An das Widerlager schließt sich ein hülsenförmiges Spreizelement aus Gummi und hieran eine Distanzhülse an. Der Ankerbolzen weist gegenüberliegend dem Widerlager einen Schraubenkopf auf. Zum Verspreizen des Befestigungsankers wird dieser in ein Bohrloch im Untergrund eingebracht und der Ankerbolzen durch Drehen am Schraubenkopf angezogen. Hierdurch wird das Widerlager in Richtung des Schraubenkopfes gezogen und dabei das Spreizelement gestaucht. Durch die Stauchung wölbt sich das Spreizelement nach außen und verspreizt sich im Bohrloch.

Derartige Befestigungsanker sind insbesondere für die wiederholte Montage und Demontage, beispielsweise zum Sichern eines Gerüstes an einem Bauwerk, geeignet. Durch das Lösen des Ankerbolzens wird das Spreizelement entspannt und kehrt in seine ursprüngliche Form zurück. Hierdurch ist der Befestigungsanker demontierbar. Gerade bei wechselndem Einsatz des Befestigungsankers können sehr unterschiedliche Untergründe auftreten, wie z.B. Vollbaustoffe oder Lochbaustoffe. Für diese unterschiedlichen Einsätze ist der Befestigungsanker jedoch nur bedingt geeignet. Der Erfindung liegt daher die Aufgabe zugrunde, einen derartigen Befestigungsanker dahingehend weiterzubilden, dass er für unterschiedlichste Untergründe geeignet ist, d.h. bei ansonsten vergleichbaren Verhältnissen höhere Haltewerte erzielt.

Diese Aufgabe wird erfindungsgemäß durch die Merkmale des Anspruchs 1 gelöst. Die Erfindung schlägt vor, dass das Spreizelement abschnittsweise unterschiedliche Härten aufweist. Unterschiedliche Härten bedingen unterschiedliche Elastizitäten, wobei für die Erfindung letztlich die Elastizität das entscheidende Kriterium ist. Allerdings werden diese bei Gummistoffen häufig indirekt durch die Härte angegeben. Durch die abschnittsweise unterschiedlichen Härten des Spreizelements verformt sich dieses ungleichmäßig in unterschiedlichen Abschnitten. In den härteren Abschnitten können so sehr hohe Anlagekräfte erreicht werden, während die weichen Abschnitte den Vorteil haben, dass sie in Hinterschneidungen, beispielsweise Hohlräumen in Ziegeln, eindringen und hierdurch eine formschlüssige Verbindung erzielen können. Damit ist der Befestigungsanker für unterschiedlichste Untergründe geeignet. Der Untergrund wird geschont, d.h. es kommt bei spröden Materialien zu keinen Ausbrüchen. Der Befestigungsanker spreizt bei Rissbildung nach, dämpft Vibrationen und dichtet das Bohrloch ab.

Es sei bemerkt, dass mit dem Begriff "gummiartig" jegliche Werkstoffe gemeint sind, die gummiähnliche Eigenschaften aufweisen. Der Begriff "abschnittsweise" ist nicht im Sinne definierter Grenzen zwischen unterschiedlichen Härten aufzufassen. Abschnitte unterschiedlicher Härte können sowohl stetig als auch unstetig ineinander übergehen.

Grundsätzlich kann die Härte des Spreizelements über den Umfang hinweg variieren. Vorzugsweise variiert sie jedoch über die Länge des Befestigungsankers und nimmt insbesondere in Einbringrichtung des Befestigungsankers ab. Durch Verspreizung des Spreizelements kann so beispielsweise eine birnenförmige Verspreizung des Spreizelements erreicht werden, was insbesondere bei Hohlräumen in Untergründen zu einem günstigen Verankerungsverhalten führt.

Ein kostengünstiger Aufbau ergibt sich durch eine Hintereinanderreihung von Einzelelementen, die zusammen das Spreizelement bilden. Im einfachsten Fall sind die Einzelelemente ring- bzw. hülsenförmig. Insbesondere ihre äußere Form ist nicht zwingend kreisförmig, also beispielsweise profiliert oder mehrkantig.

Je nach Abstimmung der Härten und Durchmesser kann es vorteilhaft sein, wenn die Einzelelemente unterschiedliche Abmessungen in Längsrichtung des Befestigungsankers oder auch unterschiedliche Oberflächeneigenschaften aufweisen. Zwischen den Einzelelementen sind vorzugsweise Stahlscheiben angeordnet.

Das Widerlager ist vorzugsweise zylindrisch, kann jedoch auch konisch ausgebildet sein.

Der Befestigungsanker kann sowohl als Hülsenanker als auch als Bolzenanker ausgeführt sein. Dabei ist mit einem Hülsenanker gemeint, dass das Widerlager mutternartig auf einen schraubenartigen Ankerbolzen aufgeschraubt ist, wie das in der genannten Druckschrift DE 1 008 995 gezeigt ist. Bei einer Ausführung als Bolzenanker ist das Widerlager dagegen drehfest mit dem Ankerbolzen verbunden und der Ankerbolzen weist an seinem entgegengesetzten Ende ein Gewinde auf, an dem mittels einer Mutter oder dgl. gezogen werden kann. In beiden Fällen wird das Spreizelement zwischen dem Widerlager und dem entgegengesetzten Ende des Ankerbolzens, d.h. dem Schraubenkopf bzw. der Mutter, gestaucht und dadurch verspreizt.

Unabhängig von der Ausführung als Hülsenanker oder Bolzenanker kann in Einbringrichtung des Befestigungsankers hinter dem Spreizelement eine Distanzhülse, beispielsweise aus Stahl, angeordnet sein. Sie dient einerseits dazu, dass das Spreizelement in seiner Länge auf den Verankerungsbereich beschränkt werden kann, wodurch auch die Anzahl der Umdrehungen zum Verankern des Befestigungsankers beschränkt wird. Weiterhin kann sie jedoch auch zum Ableiten von Querkräften in den Untergrund verwendet werden. Sie weist hierzu vorzugsweise einen größeren Außendurchmesser auf als die Spreizelemente, wobei sich dies auf den nicht verspreizten Zustand bezieht. Bohrloch und Distanzhülse werden idealerweise so aufeinander abgestimmt, dass die Distanzhülse satt in das Bohrloch passt. Aufgrund des kleineren Durchmessers des Spreizelements ist der Anker dennoch gut in das Bohrloch einführbar. Erst durch Anziehen des Befestigungsankers wird das Spreizelement verspreizt und legt sich fest an die Bohrlochwandung an.

Die Erfindung wird nachfolgend anhand zweier Ausführungsbeispiele erläutert.

Es zeigen:
- Figur 1: ein erstes Ausführungsbeispiel in Schnittdarstellung; und
- Figur 2: ein zweites Ausführungsbeispiel ebenfalls in Schnittdarstellung.

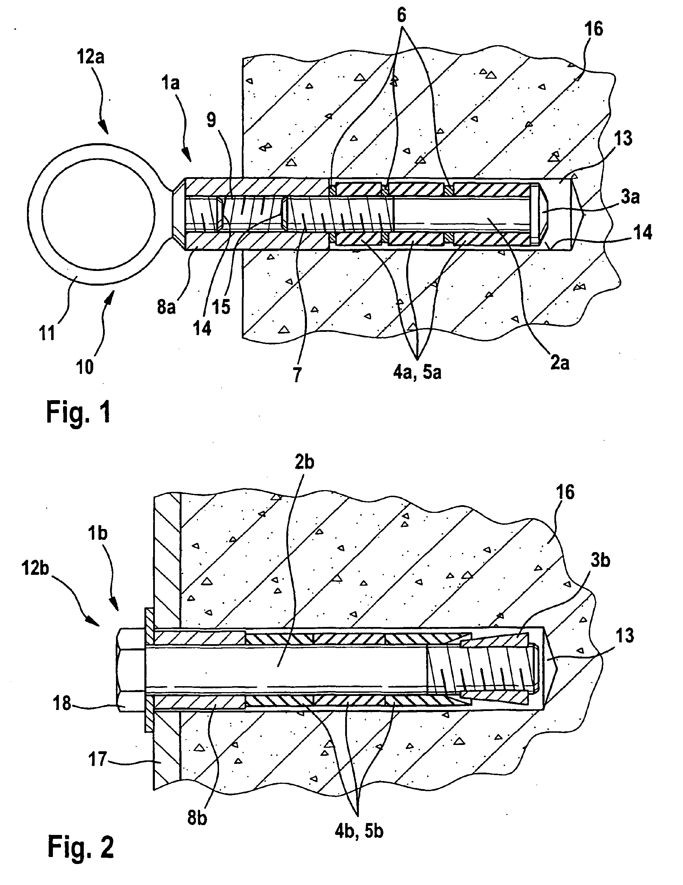

Der in Figur 1 dargestellte Befestigungsanker 1a dient der Befestigung eines nicht dargestellten Gegenstands an einem Untergrund 16. Der Befestigungsanker 1a weist einen Ankerbolzen 2a mit einem hieran einstückig angeformten Widerlager 3a auf. An das Widerlager 3a schließen sich mehrere unterschiedlich lange ringförmige Einzelelemente 4a aus Gummi an, die gemeinsam ein Spreizelement 5a bilden. Zwischen den Einzelelementen 4a sind Stahlscheiben 6 angeordnet. Der Ankerbolzen 2a schließt an seinem dem Widerlager 3a entgegengesetzten Ende mit einem Außengewinde 7 ab. Auf dieses Außengewinde 7 ist eine Distanzhülse 8a mit Innengewinde 9 aufgeschraubt. Das Innengewinde 9 durchsetzt die Distanzhülse 8a vollständig, so dass an dem dem Ankerbolzen 2a entgegengesetzten Ende ein weiteres Element, im vorliegenden Fall eine Schraube 10 mit ringförmigem Kopf 11, befestigt werden kann. An dem ringförmigen Kopf 11 kann beispielsweise ein Gerüst als Gegenstand temporär befestigt werden.

Zur Erstellung der in Figur 1 dargestellten Befestigungsanordnung 12a wird zunächst ein Bohrloch 13 in den Untergrund 16 eingebracht. Der Befestigungsanker 1a wird anschließend in dem dargestellten unverspreizten Zustand in das Bohrloch 13 eingeschoben. Dabei kommt der Außenumfang der Distanzhülse 8a flächig in Anlage mit der Bohrlochwandung 14. Aufgrund des kleineren Außendurchmessers liegt das Spreizelement 5a dagegen nur lose an. In der Zeichnung ist dies übertrieben dargestellt, tatsächlich ist zumindest eine leichte Anlage des Spreizelements 5a notwendig, damit der Befestigungsanker 1 a beim Anziehen nicht mitdreht. Zum Anziehen wir die Schraube 10 an dem ringförmigen Kopf 11 gedreht, was zu einem Mitdrehen der Distanzhülse 8a führt. Sofern durch Anlage der Spreizelemente 5a an der Bohrlochwandung 14 ein Mitdrehen des Ankerbolzens 2a verhindert wird, wird dieser in die Distanzhülse 8a gezogen. Hierdurch wird das Spreizelement 5a zwischen der Distanzhülse 8a und dem Widerlager 3a gestaucht und hierdurch radial verspreizt. Dies führt zu einem sicheren Verankern des Befestigungsankers 1a in dem Untergrund 16. Das Verspreizen wird durch das Aufsitzen der beiden Enden 14, 15 der Schraube 10 bzw. des Ankerbolzens 2a begrenzt. Dies ermöglicht ein definiertes Anziehen ohne Verwendung eines Drehmomentschlüssels.

Sollte die Befestigungsanordnung 12 nicht mehr benötigt werden, so kann der Befestigungsanker 1a durch Lösen der Schraube 10 und der Distanzhülse 8a gelöst werden, wodurch das Spreizelement 5a seine ursprüngliche Gestalt annimmt und der Befestigungsanker 1a aus dem Bohrloch herausnehmbar ist. Der Befestigungsanker 1a ist dann für eine erneute Befestigung verwendbar.

Die Einzelelemente 4a des Spreizelements 5a weisen unterschiedliche Härten, beispielsweise 80, 90 und 95 Shore, auf, wobei das am Widerlager 3a angrenzende Einzelelement am weichsten ist. Hierdurch ist der Befestigungsanker 1a für unterschiedlichste Untergründe geeignet.

Während der Befestigungsanordnung 1a aus Figur 1 als Bolzenanker ausgeführt ist, ist der Befestigungsanker 1b aus Figur 2 als Hülsenanker ausgeführt. Er dient der Bildung einer Befestigungsanordnung 12b zur Befestigung des Gegenstandes 17 am Untergrund 16. Entsprechend der Ausführung des Befestigungsankers 1b als Hülsenanker ist der Ankerbolzen 2b schraubenartig ausgeführt. Er weist einen Sechskant-Schraubenkopf 18 an seinem dem Widerlager 3b entgegengesetzten Ende auf. Das Widerlager 3b ist mutternartig auf den Ankerbolzen 2b aufgeschraubt. Es weist eine konische Außenkontur auf. An das Widerlager 3b schließen sich wiederum ringförmige Einzelelemente 4b an, die gemeinsam ein Spreizelement 5b bilden. Hieran schließt sich wiederum eine Distanzhülse 8b an.

Die Montage der Befestigungsanordnung 12b kann in sogenannter Durchsteckmontage erfolgen. Dabei wird beispielsweise zunächst der Gegenstand 17 auf den Untergrund 16 aufgesetzt und durch den Gegenstand 17 hindurch ein Bohrloch 13 in den Untergrund 16 eingebracht. Anschließend wird der Befestigungsanker 1b in dem dargestellten Zustand durch den Gegenstand 17 hindurch in das Bohrloch 13 eingesteckt und der Befestigungsanker 1b durch Drehen am Sechskant-Schraubenkopf 18 verspannt. Dabei wird das Widerlager 3b in Richtung des Sechskant-Schraubenkopfs 18 gezogen. Dies bewirkt ein Stauchen und Verspreizen des Spreizelements 5b. Auch in diesem Ausführungsbeispiel passen sich die Einzelelemente 4b aufgrund ihrer unterschiedlichen Härten optimal an den Untergrund 16 an. Der Befestigungsanker 1b kann mehrfach wiederverwendet werden.

## Patentansprüche

1. Befestigungsanker (1a, b) zur Befestigung eines Gegenstandes (17) an einem Untergrund (16), mit einem Ankerbolzen (2a, 2b), einem in Einbringrichtung des Befestigungsankers (1a, 1b) vorne angeordneten Widerlager (3a, 3b) und einem gummiartigen Spreizelement (5a, 5b), wobei das Spreizelement (5a, 5b) abschnittsweise unterschiedliche Härten aufweist, **dadurch gekennzeichnet, dass** die Härte des Spreizelements (5a, 5b) in Einbringrichtung über die Länge des Befestigungsankers (1 a, 1b) abnimmt.

2. Befestigungsanker nach Anspruch 1, **dadurch gekennzeichnet, dass** das Spreizelement (5a, 5b) aus in Längsrichtung des Befestigungsankers (1a, 1b) hineinander angeordneten Einzelelementen (4a, 4b) besteht.

3. Befestigungsanker nach Anspruch 2, **dadurch gekennzeichnet, dass** die Einzelemente (4a, 4b) ringförmig sind.

4. Befestigungsanker nach Anspruch 2, **dadurch gekennzeichnet, dass** die Einzelemente (4a, 4b) unterschiedliche Abmessungen in Längsrichtung des Befestigungsankers (1a, 1 b) aufweisen.

5. Befestigungsanker nach Anspruch 2, **dadurch gekennzeichnet, dass** die Einzelemente (4a, 4b) unterschiedliche Oberflächeneigenschaften aufweisen.

6. Befestigungsanker nach Anspruch 2, **dadurch gekennzeichnet, dass** zwischen den Einzelementen (4a) Stahlscheiben (6) angeordnet sind.

7. Befestigunsanker nach Anspruch 1, **dadurch gekennzeichnet, dass** das Widerlager (3b) konisch ausgebildet ist.

8. Befestigunsanker nach Anspruch 1, **dadurch gekennzeichnet, dass** der Befestigungsanker (1b) als Hülsenanker ausgeführt ist.

9. Befestigunsanker nach Anspruch 1, **dadurch gekennzeichnet, dass** der Befestigungsanker (1a) als Bolzenanker ausgeführt ist.

10. Befestigungsanker nach Anspruch 1, **dadurch gekennzeichnet, dass** der Befestigungsanker (1a, 1b) eine Distanzhülse (8a, 8b) aufweist, welche in Einbringrichtung des Befestigungsankers (1a, 1 b) hinter dem Spreizelement (5a, 5b) angeordnet ist.

11. Befestigungsanker nach Anspruch 10, **dadurch gekennzeichnet, dass** der Befestigungsanker (1a, 1b) im Bereich der Distanzhülse (8a, 8b) einen größeren Außendurchmesser aufweist als im Bereich des Spreizelements (5a, 5b).

## Claims

1. Fixing anchor (1a, 1b) for fixing an article (17) to a substrate (16), having an anchor bolt (2a, 2b), a counter-bearing (3a, 3b), which is arranged at the front in the direction of insertion of the fixing anchor (1a, 1b), and a rubber-like expansion element (5a, 5b), the expansion element (5a, 5b) having zones with different degrees of hardness, **characterized in that** the hardness of the expansion element (5a, 5b) decreases in the direction of insertion over the length of the fixing anchor (1a, 1b).

2. Fixing anchor according to claim 1, **characterized in that** the expansion element (5a, 5b) consists of individual elements (4a, 4b) arranged in series in the longitudinal direction of the fixing anchor (1a, 1b).

3. Fixing anchor according to claim 2, **characterized in that** the individual elements (4a, 4b) are ring-shaped.

4. Fixing anchor according to claim 2, **characterized in that** the individual elements (4a, 4b) have different dimensions in the longitudinal direction of the fixing anchor (1a, 1b).

5. Fixing anchor according to claim 2, **characterized in that** the individual elements (4a, 4b) have different surface characteristics.

6. Fixing anchor according to claim 2, **characterized in that** steel discs (6) are arranged between the individual elements (4a).

7. Fixing anchor according to claim 1, **characterized in that** the counter-bearing (3b) is of conical construction.

8. Fixing anchor according to claim 1, **characterized in that** the fixing anchor (1b) is configured as a sleeve anchor.

9. Fixing anchor according to claim 1, **characterized in that** the fixing anchor (1a) is configured as a bolt anchor.

10. Fixing anchor according to claim 1, **characterized in that** the fixing anchor (1a, 1b) has a spacer sleeve (8a, 8b) which is arranged to the rear of the expansion element (5a, 5b) in the direction of insertion of the fixing anchor (1a, 1b).

11. Fixing anchor according to claim 10, **characterized in that** the fixing anchor (1a, 1b) has a larger outer diameter in the region of the spacer sleeve (8a, 8b) than in the region of the expansion element (5a, 5b).

## Revendications

1. Ancrage de fixation (1a, 1b) pour fixer un objet (17) sur un support (16), avec un boulon d'ancrage (2a, 2b), un élément de contre-appui (3a, 3b) placé à l'avant dans la direction d'insertion de l'ancrage de fixation (1a, 1b) et un élément expansible (5a, 5b) du genre caoutchouc, sachant que l'élément expansible (5a, 5b) présente des duretés différentes par tronçons, **caractérisé en ce que** la dureté de l'élément expansible (5a, 5b) diminue sur la longueur de l'ancrage de fixation (1a, 1b) dans la direction d'insertion.

2. Ancrage de fixation selon la revendication 1, **caractérisé en ce que** l'élément expansible (5a, 5b) est constitué d'éléments individuels (4a, 4b) disposés les uns à la suite des autres dans la direction longitudinale de l'ancrage de fixation (1a, 1b).

3. Ancrage de fixation selon la revendication 2, **caractérisé en ce que** les éléments individuels (4a, 4b) sont annulaires.

4. Ancrage de fixation selon la revendication 2, **caractérisé en ce que** les éléments individuels (4a, 4b) présentent des dimensions différentes dans la direction longitudinale de l'ancrage de fixation (1a, 1b).

5. Ancrage de fixation selon la revendication 2, **caractérisé en ce que** les éléments individuels (4a, 4b) présentent des propriétés de surface différentes.

6. Ancrage de fixation selon la revendication 2, **caractérisé en ce que** des rondelles en acier (6) sont disposées entre les éléments individuels (4a).

7. Ancrage de fixation selon la revendication 1, **caractérisé en ce que** l'élément de contre-appui (3b) est réalisé conique.

8. Ancrage de fixation selon la revendication 1, **caractérisé en ce que** l'ancrage de fixation (1b) est réalisé sous forme d'ancrage à douille.

9. Ancrage de fixation selon la revendication 1, **caractérisé en ce que** l'ancrage de fixation (1a) est réalisé sous forme d'ancrage à vis.

10. Ancrage de fixation selon la revendication 1, **caractérisé en ce que** l'ancrage de fixation (1a, 1b) présente un manchon d'espacement (8a, 8b) qui est disposé après l'élément expansible (5a, 5b) dans la direction d'insertion de l'ancrage de fixation (1a, 1b).

11. Ancrage de fixation selon la revendication 10, **caractérisé en ce que** l'ancrage de fixation (1a, 1b) présente un plus grand diamètre extérieur dans la région du manchon d'espacement (8a, 8b) que dans la région de l'élément expansible (5a, 5b).
